(19) Europäisches Patentamt
European Patent Office
Office européen des brevets

(11) **EP 3 791 704 B1**

(12) **EUROPÄISCHE PATENTSCHRIFT**

(45) Veröffentlichungstag und Bekanntmachung des Hinweises auf die Patenterteilung:
**15.06.2022  Patentblatt 2022/24**

(21) Anmeldenummer: **20193515.2**

(22) Anmeldetag: **31.08.2020**

(51) Internationale Patentklassifikation (IPC):
**A01B 59/06** *(2006.01)*    **A01B 63/02** *(2006.01)*
**A01B 69/00** *(2006.01)*

(52) Gemeinsame Patentklassifikation (CPC):
**A01B 59/066; A01B 63/023; A01B 69/001**

(54) **VERFAHREN ZUR STEUERUNG DES BETRIEBS EINES ANBAUGERÄTES**

METHOD FOR CONTROLLING THE OPERATION OF AN ATTACHMENT

PROCÉDÉ DE COMMANDE DU FONCTIONNEMENT D'UN OUTIL DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2019   DE 102019213746**

(43) Veröffentlichungstag der Anmeldung:
**17.03.2021   Patentblatt 2021/11**

(73) Patentinhaber: **Deere & Company**
**Moline, IL 61265 (US)**

(72) Erfinder: **Schmidt, Martin**
**68163 Mannheim (DE)**

(74) Vertreter: **Reichert, Christian**
**John Deere GmbH & Co. KG**
**Mannheim Regional Center**
**Global Intellectual Property Services**
**John-Deere-Straße 70**
**68163 Mannheim (DE)**

(56) Entgegenhaltungen:
EP-A1- 3 300 558     EP-A2- 1 252 806
DE-A1- 2 845 111     DE-A1-102015 009 889

**Beschreibung**

Die Erfindung betrifft ein Verfahren zur Steuerung des Betriebs eines Anbaugerätes, welches über einen Kraftheber an einen Traktor gekoppelt ist.

Aus US 9 555 813 B2 ist ein Verfahren zur Vermeidung von Instabilitäten einer Fahrzeug-Anhänger-Kombination bekannt. Bei diesem Verfahren wird mittels einer Kamera beispielsweise ein Gierwinkel des Anhängers bestimmt, der mit einem Schwellenwert verglichen wird. Abhängig von dem Vergleichsergebnis kann ein Warnsignal ausgegeben werden, um einem ESP-System oder dem Fahrer Korrekturmaßnahmen zu ermöglichen.

Weitere Verfahren zur Steuerung des Betriebs eines Anbaugeräts sind aus den Druckschriften EP 1 252 806 A2, DE 28 45 111 A1 und EP 3 300 558 A1 bekannt.

Der vorliegenden Erfindung liegt die Aufgabe zugrunde, auf einfache Weise einen effizienten Arbeitsbetrieb mit einem Anbaugerät zu ermöglichen.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Gemäß Patentanspruch 1 ist das Anbaugerät über einen Kraftheber an einen Traktor gekoppelt. Der Kraftheber weist zwei Unterlenker auf und ist insbesondere als Dreipunkt-Kraftheber (mit einem Oberlenker und zwei Unterlenkern) ausgebildet. Die Steuerung des Betriebs des Anbaugerätes erfolgt in Abhängigkeit von einem ermittelten Zugpunkt bzw. in Abhängigkeit von dessen ermittelter Lage. Der Zugpunkt ist ein geometrischer Schnittpunkt gedachter Verlängerungen der beiden Unterlenker. Er wird in Abhängigkeit von zwei Bezugswinkeln $\alpha$ und $\beta$ ermittelt. Diese Bezugswinkel sind jeweils von einer gedachten Verlängerung eines Unterlenkers und einer Bezugsgeraden eingeschlossen. Zur Ermittlung der Bezugswinkel wird von dem Grundgedanken ausgegangen, die Unterlenker, insbesondere deren Position oder Lage, durch optische Mittel zu erfassen.

Hierdurch kann für die Ermittlung der Bezugswinkel - und folglich auch für die Ermittlung einer aktuellen Lage des Zugpunktes - auf Sensoren und weitere technische Bauteile zur Messung einzelner physikalischer Größen (z.B. aktuelle Länge eines Seitenstabilisators am Unterlenker) am Kraftheber verzichtet werden. Vielmehr muss lediglich eine optische Sensorik bereitgestellt und an einer geeigneten Stelle (z.B. an der Kabinenrückseite des Traktors) positioniert werden, um die Lage eines Unterlenkers oder zumindest einen Längenabschnittes dieses Unterlenkers optisch zu erfassen. Anhand der Daten der optischen Erfassung lassen sich mit verhältnismäßig einfachen Datenverarbeitungsmitteln technisch einfach die entsprechenden Bezugswinkel $\alpha$ und $\beta$ ermitteln. Somit wird ein kostengünstiges und einfaches Verfahren zur möglichst genauen Ermittlung des Zugpunktes bereitgestellt.

Eine einfache und exakte Ermittlung des Zugpunktes wiederum schafft die Grundlage für eine effiziente Optimierung des Zugpunktes während des Arbeitsbetriebs des Anbaugerätes, sei es durch eine Optimierung seitens des Fahrers bzw. Benutzers oder sei es durch eine automatisierte Optimierung. Durch diese Optimierung des Zugpunktes wird der Arbeitsbetrieb des Anbaugerätes mit geringem technischen Aufwand effizienter. Dies senkt den Kraftstoffverbrauch des Traktors und spart Arbeitszeit. Gleichzeitig wird eine hohe Arbeitsqualität des Anbaugerätes unterstützt. Außerdem wirkt die Optimierung des Zugpunktes als eine Assistenzfunktion für den Fahrer bzw. Benutzer, so dass er vor und während des Arbeitsbetriebes erheblich entlastet wird. Beispielsweise können während des Arbeitseinsatzes (z.B. Pflügen, sich ändernde Boden- und Topographieeigenschaften wie etwa Hanglage) ein unerwünschtes Gieren und entsprechend notwendige Lenkeingriffe durch den Fahrer vermieden werden, indem die Lage des Zugpunktes optimiert wird. Bei einer anderen Verstellung des Zugpunktes kann beispielsweise auch ein definierter Seitenzug des Anbaugerätes relativ zu einer Furchenwand beim Pflügen realisiert werden. Insgesamt entsteht eine höhere Produktivität bei niedrigeren Betriebskosten.

Die Ermittlung des Zugpunktes beinhaltet insbesondere die Ermittlung seiner Lage in einem definierten Koordinatensystem. Dessen Koordinatenursprung oder Nullpunkt entspricht einem definierten Referenzpunkt, insbesondere einem Mittelpunkt der Hinterachse des Traktors. Dabei schneiden sich vorzugsweise eine x-Achse, eine y-Achse und eine z-Achse in dem Koordinatenursprung. Die x-Achse verläuft insbesondere parallel zu einer Längsrichtung bzw. einer Fahrzeug-Horizontalen des Traktors. Die y-Achse verläuft insbesondere parallel zu einer Querrichtung bzw. einer Fahrzeug-Horizontalen des Traktors. Die z-Achse verläuft insbesondere parallel zu einer Hochrichtung bzw. einer Fahrzeug-Vertikalen des Traktors. Mit diesem Koordinatensystem lässt sich die Lage des Zugpunktes mathematisch einfach mit einem eindeutigen Referenzpunkt ermitteln und definieren.

Für die optische Erfassung der Unterlenker wird eine geeignete optische Sensorik bereitgestellt, wie etwa mindestens eine Kamera beliebiger Bauart oder LiDAR Sensoren. Die optische Sensorik wird an einer Stelle (oder verteilt an mehreren Stellen) des Traktors derart befestigt, dass die Sensorik freie Sicht auf die Unterlenker oder zumindest auf Abschnitte der Unterlenker hat.

Vorzugsweise ist die optische Sensorik derart ausgebildet, dass die Unterlenker in Form von Bilddaten optisch erfasst werden. Diese Daten lassen sich technisch einfach verarbeiten, um den Zugpunkt mit hoher Genauigkeit zu ermitteln. Die Bilddaten ermöglichen eine breit gestreute Messfläche und ein Verfahren, das sich auch gegen Staub, Schmutz an den Unterlenkern und anderen Störfaktoren datentechnisch robust verhält.

Für die Verarbeitung der Bilddaten wird vorzugsweise eine Datenverarbeitungseinheit bereitgestellt, an deren Ausgang bzw. Ausgängen Ausgangssignale anliegen, welche den ermittelten Wert des jeweiligen Bezugswinkels repräsentieren. Diese Datenverarbeitungseinheit kann technisch einfach in eine Steuereinheit des Traktors implementiert werden, welche eine Signalisierung des ermittelten Zugpunktes und/oder dessen Optimierung unterstützt.

Vorzugsweise enthält die Datenverarbeitungseinheit mindestens ein (künstliches) neuronales Netzwerk, so dass die Bilddaten einerseits zuverlässig mit hoher Genauigkeit und andererseits mit geringem technischen Aufwand verarbeitet werden können. Derartige künstliche neuronale Netzwerke benötigen lediglich eine spezifische Definitionsphase und eine spezifische Lernphase (Trainieren), bis sie hinreichend genaue Ausgangsdaten liefern. Sie werden insbesondere für Klassifizierungs- oder Regressionsaufgaben verwendet. Hierdurch lassen sich neuronale Netzwerke auch vorteilhaft für eine Auswertung der Bilddaten einer optischen Sensorik und folglich für eine Ermittlung bzw. Berechnung der Bezugswinkel $\alpha$ und $\beta$ anwenden.

In einer bevorzugten Ausführungsform wird in der Datenverarbeitungseinheit ein neuronales Netzwerk eingesetzt, welches als Eingangssignale die Bilddaten der optischen Sensorik erhält. Dieses Rohbild wird in dem Netzwerk klassifiziert bzw. segmentiert. Hierdurch entsteht als Ausgangssignal bzw. Ausgangsdaten ein Binärbild, in dem nur die Pixel der Unterlenker einen anderen Wert haben als die Bildpixel außerhalb der Unterlenker.

Bei einer weiteren bevorzugten Ausführungsform repräsentieren die Ausgangsdaten eines neuronalen Netzwerkes einen Wert des jeweiligen Bezugswinkels $\alpha$ oder $\beta$. Hierbei führt das Netzwerk insbesondere einen Regressionsansatz für eine wertkontinuierliche Prädiktion des jeweiligen Bezugswinkels durch. Für diese Prädiktion kann ein Netzwerk mit zwei Ausgangsneuronen verwendet werden, welche jeweils einem Bezugswinkel $\alpha$ oder $\beta$ zugeordnet sind. Alternativ können für diese Prädiktion parallel zwei Netzwerke mit jeweils einem Ausgangsneuron für den jeweiligen Bezugswinkel $\alpha$ oder $\beta$ bereitgestellt werden.

Um die Betriebssicherheit und Zuverlässigkeit bei der Ermittlung der Bezugswinkel zu unterstützen, weist die Datenverarbeitungseinheit vorzugsweise eine Prüfstufe auf, in der Ausgangsdaten des jeweiligen Netzwerkes mit vordefinierten Plausibilitätsdaten verglichen werden. Die Plausibilitätsdaten repräsentieren beispielsweise Grenzwerte theoretisch möglicher Extrempositionen der Unterlenker, eine geometrische Form der Unterlenker, Sichtbedingungen und/oder Umfeldbedingungen der Unterlenker. Die Plausibilitätsdaten sind insbesondere Bestandteil entsprechender Algorithmen, mit denen die Ausgangsdaten des jeweiligen Netzwerkes auf ihre Plausibilität hin überprüft werden.

Im Falle des bereits erwähnten Binärbildes als Ausgangsdaten eines Netzwerkes wird in einer nachfolgenden Prüfstufe beispielsweise überprüft, ob das Ergebnis für die einzelnen Unterlenkerpixel und/oder für die Gesamtheit aller Unterlenkerpixel plausibel erscheint. Die Ausgangssignale der Prüfstufe repräsentieren dann ein ggf. korrigiertes Binärbild des jeweiligen Unterlenkers. Diese Ausgangssignale können einem weiteren trainierten neuronalen Netzwerk zugeführt werden, welches über einen Regressionsansatz wertkontinuierlich den aktuellen Wert des jeweiligen Bezugswinkel $\alpha$ bzw. $\beta$ prädiziert.

Im Falle einer Verarbeitung des Rohbildes der optischen Sensorik zu einer wertkontinuierlichen Prädiktion der betrachteten Bezugswinkel $\alpha$ und $\beta$ als Ausgangsdaten eines neuronalen Netzwerkes können diese Ausgangsdaten ebenfalls einer nachfolgenden Prüfstufe zugeführt werden. Die Ausgangssignale der Prüfstufe repräsentieren dann ggf. korrigierte Werte des jeweiligen Bezugswinkels a, $\beta$.

Die Bezugsgerade ist insbesondere eine Parallele zu einer Längsrichtung des Traktors. Aus dem jeweiligen Bezugswinkel kann beispielsweise eine Unterlenker-Wirklinie mit einer geometrischen Steigung ermittelt werden. Mit diesen Daten kann z.B. ein Schnittpunkt zwischen beiden Unterlenker-Wirklinien und somit die Lage des Zugpunktes in einem definierten Koordinatensystem ermittelt bzw. berechnet werden.

Um einen effizienten Betrieb bzw. Arbeitseinsatz des Anbaugerätes zu unterstützen, wird vorzugsweise die ermittelte Lage des Zugpunktes mit einer Soll-Vorgabe verglichen. In Abhängigkeit von dem Vergleichsergebnis kann ein Funktionssignal zur automatischen Auslösung einer Funktion generiert werden. Beispielsweise können Steuersignale bzw. Verstellsignale als Funktionssignale (z.B. über ein traktorseitiges Bussystem oder an hydraulische und/oder elektrische Aktuatoren) generiert werden. Diese Funktionssignale können als Funktionen spezifische Einstellungen am Anbaugerät und/oder Traktor (z.B. Lenkung) und/oder dessen Kraftheber (z.B. Unterlenker, Seitenstabilisatoren) automatisiert auslösen.

Die Soll-Vorgabe wird vorzugsweise durch den Fahrer (z.B. über eine Benutzerschnittstelle) oder durch eine traktorseitige Steuerung (z.B. über ein Bussystem oder Steuergerät) generiert. Während des vorgenannten Vergleiches wird vorzugsweise zunächst eine Abweichung zwischen der aktuellen Lage und der Soll-Vorgabe ermittelt und danach die ermittelte Abweichung mit einem vorbestimmten Abweichungs-Schwellenwert verglichen. Eine Generierung von Funktionssignalen und somit eine Funktionsauslösung (z.B. automatisierte Verstellung des Zugpunktes) erfolgt vorzugsweise nur dann, wenn als Vergleichsergebnis die ermittelte Abweichung den vorbestimmten Abweichungs-Schwellenwert erreicht oder überschreitet.

Mit der automatisierten Funktionsauslösung kann der Zugpunkt automatisiert optimiert werden. Für eine Optimierung des Zugpunktes bzw. dessen Lage wird beispielsweise die Position eines Unterlenkers derart eingeregelt, dass sich der Zugpunkt auf einer Mittellängsachse des Traktors befindet.

Wie bereits erwähnt, ist eine automatisierte Verstellung des Zugpunktes bzw. seiner Lage vorzugsweise von einem Vergleich seiner ermittelten Lage mit einer Soll-Vorgabe abhängig. Abhängig vom Vergleichsergebnis können entsprechende Funktionssignale generiert werden, welche als Steuersignale an Aktuatoren gesendet werden. Mittels dieser Aktuatoren werden die Unterlenker verstellt, wodurch eine Verstellung der aktuellen Lage des Zugpunktes erfolgen kann. Dabei werden die Unterlenker insbesondere dadurch verstellt, dass in Abhängigkeit des Funktionssignals eine Länge eines längenveränderlichen Seitenstabilisators verstellt wird, welcher mit einem der beiden Unterlenker beglich gekoppelt ist. Vorzugsweise wird mittels entsprechender Funktions- bzw. Verstellsignale ein Hydraulikzylinder des Seitenstabilisators für die erforderliche Längenänderung angesteuert. Für den Fall, dass beide Unterlenker mit jeweils einem Seitenstabilisator gekoppelt sind, können beide Seitenstabilisatoren zur Längenverstellung angesteuert werden.

Alternativ kann bei einer Ausführung ohne Hydraulikzylinder am Seitenstabilisator das Funktionssignal eine (insbesondere akustische und/oder optische) Warnvorrichtung aktivieren, welche den Fahrer informiert.

Lässt sich der Zugpunkt mittels einer Einregelung bzw. Verstellung des Unterlenkers nicht wie gewünscht optimieren, kann vorteilhaft ein Funktionssignal generiert werden, welches eine automatische Verstellung des Lenkwinkels der Fahrzeuglenkung um eine ermittelte Winkeländerung auslöst. Diese Winkeländerung kann bei einer fahrerfrei gesteuerten Lenkung (z.B. GPSgesteuerte Lenkung) als auch bei einer manuellen Lenkung durch den Fahrer berücksichtigt werden. Im Falle der manuellen Lenkung wird die ermittelte Winkeländerung auf den vom Fahrer aktuell eingestellten Soll-Lenkwinkel aufaddiert.

Mit den Funktionssignalen kann folglich ein automatischer Eingriff in die Lenkung des Traktors zur Kompensation eines unerwünschten Giermoments vorgenommen werden, so dass die gewünschte Trajektorie beibehalten werden kann. Dies wirkt als Komfortgewinn für den Fahrer während des Arbeitseinsatzes.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1    eine blockschaltbildartig und schematisch dargestellte Anordnung mit Bestandteilen zur Durchführung des erfindungsgemäßen Verfahrens,

Fig. 2    eine schematische Draufsicht eines Traktors mit geometrischen Details zur Ermittlung des Zugpunktes,

Fig. 3    eine schematisch dargestellte Datenverarbeitungseinheit in einer ersten Ausführungsform zur Verarbeitung von Bilddaten der Unterlenker, und

Fig. 4    eine schematisch dargestellte Datenverarbeitungseinheit in einer weiteren Ausführungsform zur Verarbeitung von Bilddaten der Unterlenker.

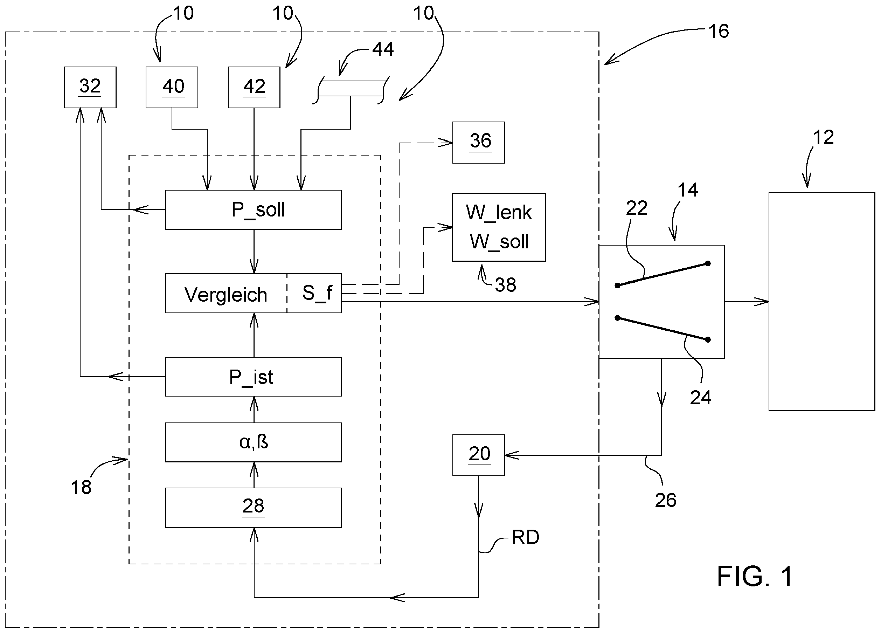

Fig. 1 zeigt eine Anordnung 10 mit mehreren Bestandteilen zur Steuerung des Arbeitsbetriebs eines Anbaugerätes 12. Das Anbaugerät 12 ist über einen Kraftheber 14 an einen Traktor 16 gekoppelt. Die Anordnung 10 ist zumindest teilweise und insbesondere vollständig traktorseitig angeordnet. Sie weist eine Steuereinheit 18 auf, welche die für eine Signalverarbeitung erforderlichen Teileinheiten wie etwa Lese- und/oder Schreibeinheit, Speichereinheit, Prozessor enthält. Die Steuereinheit 18 kann physisch voneinander getrennte Teileinheiten aufweisen oder als ein einziger Block am Traktor 16 angeordnet sein.

Die Steuereinheit 18 empfängt Sensorsignale von einer optischen Sensorik 20 (z.B. RGB-Kamera, Stereo-Kamera), welche an einer (oder mehreren) geeigneten Position(en) des Traktors 16 befestigt ist. Diese Sensorsignale können als Bilddaten bzw. Rohdaten RD eines Unterlenkers 22 bzw. 24 oder der beiden Unterlenker 22, 24 des Krafthebers 14 bezeichnet werden. Mit dem Pfeil 26 in Fig. 1 ist angedeutet, dass die optische Sensorik 20 die Lage oder Position des jeweiligen Unterlenkers 22, 24 optisch erfasst.

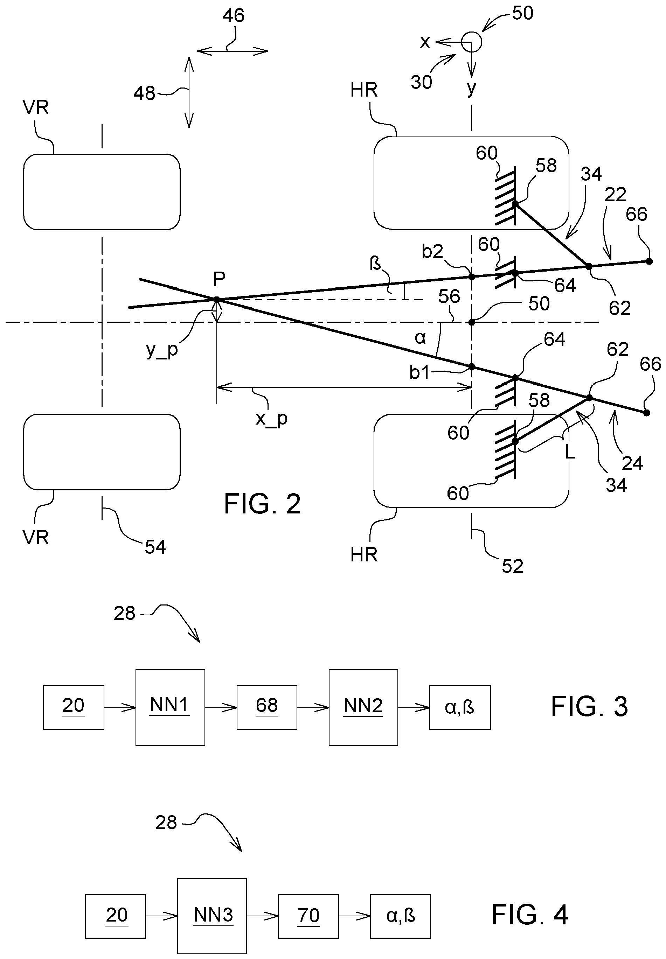

Aus den empfangenen Rohdaten RD ermittelt eine Datenverarbeitungseinheit 28 innerhalb der Steuereinheit 18 zwei noch zu beschreibende Bezugswinkel $\alpha$ und $\beta$ (Fig. 2). Aus diesen Bezugswinkeln $\alpha$ und $\beta$ berechnet die Steuereinheit 18 die aktuelle Lage P_ist eines noch zu erläuternden Zugpunktes P. Die aktuelle Lage P_ist wird vorzugsweise in Form von Koordinaten x, y eines definierten Koordinatensystems 30 ermittelt (Fig. 2) .

Die ermittelte Lage P_ist des Zugpunktes P kann dem Fahrer über eine Anzeigeeinheit 32 des Traktors 16 signalisiert werden. Zudem kann die ermittelte Lage P_ist des Zugpunktes P abhängig von dem Ergebnis eines Vergleichs mit einer Soll-Vorgabe automatisch verstellt werden. Die Soll-Vorgabe ist eine Soll-Lage P_soll des Zugpunktes P. Die Soll-Vorgabe P_soll wird im Rahmen eines Algorithmus mit der aktuellen Lage P_ist verglichen. Abhängig von dem Vergleichsergebnis können in der Steuereinheit 18 Funktionssignale S_f generiert werden, welche den Kraftheber 14 bzw. dessen zwei Unterlenker 22, 24 zu deren Verstellung ansteuern. Diese Verstellung der Unterlenker 22, 24 kann somit eine automatische Umsetzung einer Soll-Vorgabe bewirken.

Die Funktionssignale S_f können als Steuersignale zur Auslösung einer technischen Funktion betrachtet werden. Eine solche Funktion ist die Verstellung der Unterlenker 22, 24 zur Verstellung und Optimierung der Lage des Zugpunktes P. Hierbei wird in Abhängigkeit von dem Funktionssignal S_f eine Länge L eines längenveränderlichen Seitenstabilisators 34 verstellt, welcher mit einem der beiden Unterlenker 22, 24 gekoppelt ist.

Eine weitere technische Funktion ist die Aktivierung einer Warneinrichtung 36 am Traktor 16, welche den Fahrer insbesondere optisch und/oder akustisch informiert, wenn der Zugpunkt P optimiert werden sollte.

Sollte die gewünschte oder berechnete Optimierung der Lage des Zugpunktes P nicht möglich sein, kann mittels des Funktionssignals S_f eine weitere Funktion in Form eines automatischen Eingriffs in eine Lenksteuereinheit 38 der Traktorlenkung ausgelöst werden. Hierbei wird das Funktionssignal S_f beispielsweise bei der Berechnung des Lenkwinkels W_lenk einer GPS-gesteuerten Lenkung berücksichtigt oder als aufzuaddierende Winkeländerung bezüglich eines vom Fahrer vorgegebenen SollLenkwinkels W_soll berücksichtigt.

Die Funktionsauslösung bezüglich der Warneinrichtung 36 und der Lenksteuereinheit 38 sind jeweils alternativ oder zusätzlich zu der Verstellung der Unterlenker 22, 24 möglich und deshalb mit gestrichelten Pfeilen angedeutet.

Die Soll-Vorgabe P_soll kann z.B. vom Fahrer bzw. Benutzer über eine Benutzerschnittstelle 40 vorgegeben werden. Alternativ kann die Soll-Vorgabe P_soll über ein traktorseitiges Steuergerät 42 oder ein Bussystem 44 des Traktors 16 automatisch definiert werden. Die jeweilige Soll-Vorgabe P_soll kann optional an der Anzeigeeinheit 32 signalisiert werden. Der Fahrer oder Benutzer kann dann Soll-Vorgaben komfortabel erkennen und ggf. auch sehr präzise über die Benutzerschnittstelle 40 ändern.

Eine Darstellung der aktuellen Lage P_ist und der Soll-Lage P_soll an der Anzeigeeinheit 22 ist vorzugsweise ähnlich der Darstellung in Fig. 2, so dass der Benutzer einen guten Überblick über die aktuelle Lage und Veränderungen des Zugpunktes P hat.

Zur Ermittlung der Lage des Zugpunktes P ist das bereits erwähnte Koordinatensystem 30 definiert, welches anhand von Fig. 2 erkennbar ist. Das Koordinatensystem 30 weist eine x-Achse und eine y-Achse auf. Die x-Achse verläuft parallel zu einer Längsrichtung 46 des Traktors 16, insbesondere einer Fahrzeug-Horizontalen. Die y-Achse verläuft parallel zu einer Querrichtung 48 des Traktors 16, insbesondere einer weiteren Fahrzeug-Horizontalen. Die zwei genannten Achsen schneiden sich in einem Koordinatenursprung 50 bzw. Nullpunkt, der einem Referenzpunkt für die Lage des Zugpunktes P entspricht. Wie in Fig. 2 erkennbar, entspricht dieser Referenzpunkt einem Mittelpunkt einer Hinterachse 52 des Traktors 16.

Weiterhin ist Fig. 2 entnehmbar, dass bei dem dort dargestellten Arbeitseinsatz sich die Lage des Zugpunktes P entlang der Längsrichtung 46 zwischen der Hinterachse 52 mit zwei Hinterrädern HR und einer Vorderachse 54 mit zwei Vorderrädern VR des Traktors 16 befindet.

Der Zugpunkt P ist der geometrische Schnittpunkt gedachter Verlängerungen der beiden Unterlenker 22, 24 (Fig. 2). Anhand von Fig. 2 wird erläutert, wie der Zugpunkt P mit geringem technischen Aufwand in Abhängigkeit von zwei Bezugswinkeln $\alpha$, $\beta$ ermittelt werden kann. Dabei bilden eine gedachte Verlängerung des jeweiligen Unterlenkers 22, 24 und eine parallel zur Längsrichtung 46 verlaufende Bezugsgerade 56 die Winkelschenkel dieser Bezugswinkel $\alpha$, $\beta$.

Der Vollständigkeit halber sei erwähnt, dass in Fig. 2 jedem Unterlenker 22, 24 ein längenveränderlicher Seitenstabilisator 34 zugeordnet ist. Die Längenveränderung erfolgt mittels einer entsprechenden Ansteuerung eines hier nicht dargestellten Hydraulikzylinders. Der Seitenstabilisator 34 ist mit einem dem Traktor 16 zugewandten Kopplungspunkt 58 an eine Tragstruktur 60 des Traktors 16 beweglich gekoppelt. Über einen dem Kopplungspunkt 58 gegenüberliegenden Anlenkpunkt 62 ist der Seitenstabilisator 34 mit dem Unterlenker 22 gelenkig verbunden. Dieser Anlenkpunkt 62 befindet sich zwischen einer dem Traktor 16 zugewandten Kopplungsstelle 64 und einer dem Anbaugerät 12 zugewandten Kopplungsstelle 66 des Unterlenkers 22. Dieser Konstruktionsaufbau gilt analog auch für den zweiten Unterlenker 24.

Sind die Werte der Bezugswinkel $\alpha$, $\beta$ bekannt, können auch die vom Koordinatenursprung 50 ausgehenden und entlang der Querrichtung 48 verlaufenden Abstände b1 und b2 zu den gedachten Verlängerungen der Unterlenker 22, 24 berechnet werden. Aus den Bezugswinkeln $\alpha$, $\beta$ und den Abständen b1, b2 ergeben sich die x-Koordinate x_p und die y-Koordinate y_p des Zugpunktes P wie folgt:

$$\text{x\_p} = (\text{b2} - \text{b1})/(\tan \alpha - \tan \beta),$$

und

$$\text{y\_p} = (\tan \alpha \cdot \text{x\_p}) + \text{b1}.$$

Wie bereits erwähnt, erfolgt die Ermittlung der Bezugswinkel $\alpha$, $\beta$ mittels der Datenverarbeitungseinheit 28. Auf herkömmliche Messungen am Kraftheber 14, wie etwa Längenmessungen am Seitenstabilisator 34 mittels geeigneter Messsysteme kann deshalb verzichtet werden.

Eine Ausführungsform der Datenverarbeitungseinheit 28 ist in Fig. 3 dargestellt. Die Bilddaten der Sensorik 20 werden einem neuronalen Netzwerk NN1 zugeführt. Die Eingangssignale des Netzwerkes NN1 repräsentieren also das Rohbild eines Unterlenkers bzw. beider Unterlenker 22, 24. Die Ausgangssignale dieses Netzwerkes NN1 repräsentieren ein klassifiziertes Binärbild der optisch erfassten Unterlenker 22, 24. Mit anderen Worten ist den Unterlenker-Pixeln ein Wert zugewiesen, während alle anderen Bild-Pixel außerhalb der Unterlenker 22, 24 einen anderen Wert haben. Die Ausgangssignale bzw. Ausgangsdaten des Netzwerkes NN1 werden in einer Prüfstufe 68 mit vordefinierten Plausibilitätsdaten verglichen. Die Ausgangsdaten der Prüfstufe 68 repräsentieren deshalb ein ggf. korrigiertes Binärbild der Unterlenker 22, 24. Auf Basis des ggf. korrigierten Binärbildes werden in einem weiteren neuronalen Netzwerk NN2 die Werte der Bezugswinkel $\alpha$ und $\beta$ abgeleitet. Für den Fall, dass in dem Netzwerk NN2 nur ein Bezugswinkel $\alpha$ oder $\beta$ abgeleitet wird, ist an die Prüfstufe 68 noch ein weiteres neuronales Netzwerk zur Ableitung des zweiten Bezugswinkels vorgesehen.

Fig. 4 zeigt eine weitere Ausführungsform der Datenverarbeitungseinheit 28. Hier sendet die optische Sensorik 20 die Bilddaten bzw. das Rohbild an ein neuronales Netzwerk NN3. Dieses Netzwerk NN3 besitzt vorzugsweise zwei Ausgangsneuronen mit linearer Aktivierungsfunktion. Der in dem Netzwerk NN3 verwendete Regressionsansatz führt zu einer wertkontinuierlichen Prädiktion der beiden betrachteten Bezugswinkel $\alpha$ und $\beta$.

In einer nachfolgenden Prüfstufe 70 erfolgt mittels geeigneter vordefinierter Plausibilitätsdaten eine Prüfung der prädizierten Bezugswinkel-Werte auf deren Plausibilität. Die Ausgangsdaten der Prüfstufe 70 repräsentieren ggf. korrigierte Werte der Bezugswinkel $\alpha$ und $\beta$.

## Patentansprüche

1. Verfahren zur Steuerung des Betriebs eines Anbaugerätes (12), welches über einen zwei Unterlenker (22, 24) aufweisenden Kraftheber (14) an einen Traktor (16) gekoppelt ist, wobei

   - die Steuerung des Betriebs in Abhängigkeit von einem ermittelten Zugpunkt (P, P_ist) erfolgt,
   - der Zugpunkt (P, P_ist) ein geometrischer Schnittpunkt gedachter Verlängerungen beider Unterlenker (22, 24) ist und in Abhängigkeit von Bezugswinkeln ($\alpha$, $\beta$) ermittelt wird, welche die gedachten Verlängerungen der Unterlenker (22, 24) mit einer Bezugsgeraden (56) einschließen, und
   - die Bezugswinkel ($\alpha$, $\beta$) mittels einer optischen Erfassung der Unterlenker (22, 24) ermittelt werden.

2. Verfahren nach Anspruch 1, **dadurch gekennzeichnet, dass** die optische Erfassung in Form von Bilddaten (RD) erfolgt.

3. Verfahren nach Anspruch 2, **dadurch gekennzeichnet, dass** die Bilddaten (RD) in einer Datenverarbeitungseinheit (28) verarbeitet werden, deren Ausgangssignale die Bezugswinkel ($\alpha$, $\beta$) repräsentieren.

4. Verfahren nach Anspruch 3, **dadurch gekennzeichnet, dass** die Bildverarbeitungseinheit (28) mindestens ein neuronales Netzwerk (NN1, NN2, NN3) zur Verarbeitung der Bilddaten (RD) enthält.

5. Verfahren nach Anspruch 4, **dadurch gekennzeichnet, dass** Ausgangsdaten eines neuronalen Netzwerkes (NN1) ein klassifiziertes Binärbild der Bilddaten (RD) repräsentieren.

6. Verfahren nach Anspruch 4, **dadurch gekennzeichnet, dass** Ausgangsdaten eines neuronalen Netzwerkes (NN2, NN3) einen Wert des jeweiligen Bezugswinkels ($\alpha$, $\beta$) repräsentieren.

7. Verfahren nach Anspruch 5 oder 6, **dadurch gekennzeichnet, dass** Ausgangsdaten eines neuronalen Netzwerkes (NN1, NN3) in einer Prüfstufe (68, 70) der Datenverarbeitungseinheit (28) mit vordefinierten Plausibilitätsdaten verglichen werden.

8. Verfahren nach einem der vorhergehenden Ansprüche, **dadurch gekennzeichnet, dass** die Bezugsgerade (56) parallel zu einer Längsrichtung (46) des Traktors (16) verläuft.

9. Verfahren nach einem der vorhergehenden Ansprüche, **dadurch gekennzeichnet, dass**

- der ermittelte Zugpunkt (P, P_ist) mit einer Soll-Vorgabe (P_soll) verglichen wird, und
- in Abhängigkeit von dem Vergleichsergebnis ein Funktionssignal (S_f) zur Auslösung einer Funktion (34, 36, 38) generiert wird.

**10.** Verfahren nach Anspruch 9, **dadurch gekennzeichnet, dass** in Abhängigkeit des Funktionssignals (S_f) eine Länge (L) eines längenveränderlichen Seitenstabilisators (34) verstellt wird, welcher mit einem der beiden Unterlenker (22, 24) gekoppelt ist.

**11.** Verfahren nach Anspruch 9 oder 10, **dadurch gekennzeichnet, dass** in Abhängigkeit des Funktionssignals (S_f) ein Lenkwinkel (W_lenk, W_soll) einer Traktorlenkung (38) verstellt wird.

**Claims**

**1.** Method for controlling the operation of an attachment (12), which is coupled via a power lift (14) comprising two lower link arms (22, 24) to a tractor (16),
wherein

- the control of the operation is performed in dependence on an ascertained pull point (P, P_actual),
- the pull point (P, P_actual) is a geometrical intersection of imaginary extensions of both lower link arms (22, 24) and is ascertained in dependence on reference angles ($\alpha$, $\beta$), which the imaginary extensions of the lower link arms (22, 24) enclose with a reference straight line (56), and
- the reference angles ($\alpha$, $\beta$) are ascertained by means of an optical capture of the lower link arms (22, 24).

**2.** Method according to Claim 1, **characterized in that** the optical capture is performed in the form of image data (RD).

**3.** Method according to Claim 2, **characterized in that** the image data (RD) are processed in a data processing unit (28), the output signals of which represent the reference angles ($\alpha$, $\beta$).

**4.** Method according to Claim 3, **characterized in that** the image processing unit (28) contains at least one neural network (NN1, NN2, NN3) for processing the image data (RD).

**5.** Method according to Claim 4, **characterized in that** output data of a neural network (NN1) represent a classified binary image of the image data (RD).

**6.** Method according to Claim 4, **characterized in that** output data of a neural network (NN2, NN3) represent a value of the respective reference angle ($\alpha$, $\beta$).

**7.** Method according to Claim 5 or 6, **characterized in that** output data of a neural network (NN1, NN3) are compared in an inspection stage (68, 70) of the data processing unit (28) to predefined plausibility data.

**8.** Method according to any one of the preceding claims, **characterized in that** the reference straight line (56) extends in parallel to a longitudinal direction (46) of the tractor (16).

**9.** Method according to any one of the preceding claims, **characterized in that**

- the ascertained pull point (P, P_actual) is compared to a target specification (P_target), and
- a function signal (S_f) for triggering a function (34, 36, 38) is generated in dependence on the comparison result.

**10.** Method according to Claim 9, **characterized in that** a length (L) of a length-variable lateral stabilizer (34), which is coupled to one of the two lower link arms (22, 24), is adjusted in dependence on the function signal (S_f).

**11.** Method according to Claim 9 or 10, **characterized in that** a steering angle (W_steer, W_target) of a tractor steering system (38) is adjusted in dependence on the function signal (S_f).

**Revendications**

1. Procédé de commande du fonctionnement d'un accessoire (12) qui est accouplé à un tracteur (16) par le biais d'un vérin mécanique (14) comportant deux biellettes inférieures (22, 24),

   - la commande du fonctionnement étant effectuée en fonction d'un point de traction déterminé (P, P_ist),
   - le point de traction (P, P_ist) étant un point d'intersection géométrique de prolongements imaginaires de deux biellettes inférieures (22, 24) et étant déterminé en fonction d'angles de référence ($\alpha$, $\beta$) que les prolongements imaginaires des biellettes inférieures (22, 24) forment avec une droite de référence (56), et
   - les angles de référence ($\alpha$, $\beta$) étant déterminés par détection optique de biellettes inférieures (22, 24).

2. Procédé selon la revendication 1, **caractérisé en ce que** la détection optique est effectuée sous forme de données d'image (RD).

3. Procédé selon la revendication 2, **caractérisé en ce que** les données d'image (RD) sont traitées dans une unité de traitement de données (28) dont les signaux de sortie représentent les angles de référence ($\alpha$, $\beta$).

4. Procédé selon la revendication 3, **caractérisé en ce que** l'unité de traitement d'image (28) contient au moins un réseau de neurones (NN1, NN2, NN3) destiné à traiter les données d'image (RD).

5. Procédé selon la revendication 4, **caractérisé en ce que** des données de sortie d'un réseau de neurones (NN1) représentent une image binaire classée des données d'image (RD).

6. Procédé selon la revendication 4, **caractérisé en ce que** des données de sortie d'un réseau de neurones (NN2, NN3) représentent une valeur de l'angle de référence respectif ($\alpha$, $\beta$).

7. Procédé selon la revendication 5 ou 6, **caractérisé en ce que** les données de sortie d'un réseau de neurones (NN1, NN3) sont comparées à des données de plausibilité prédéfinies dans un étage de test (68, 70) de l'unité de traitement de données (28).

8. Procédé selon l'une des revendications précédentes, **caractérisé en ce que** la droite de référence (56) est parallèle à une direction longitudinale (46) du tracteur (16) .

9. Procédé selon l'une des revendications précédentes, **caractérisé en ce que**

   - le point de traction déterminé (P, P_ist) est comparé à une spécification cible (P_soll), et
   - un signal de fonction (S_f) destiné à déclencher une fonction (34, 36, 38) est généré en fonction du résultat de la comparaison.

10. Procédé selon la revendication 9, **caractérisé en ce qu'**une longueur (L) d'un stabilisateur latéral de longueur variable (34), qui est accouplé à l'une des deux biellettes inférieures (22, 24), est ajustée en fonction du signal de fonction (S_f).

11. Procédé selon la revendication 9 ou 10, **caractérisé en ce qu'**un angle de braquage (W_lenk, W_soll) d'un guidage de tracteur (38) est ajusté en fonction du signal de fonction (S_f).

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9555813 B2
- EP 1252806 A2
- DE 2845111 A1
- EP 3300558 A1